# EUROPEAN PATENT APPLICATION

(11) **EP 4 170 628 A1**
(43) Date of publication of application: **26.04.2023**
(21) Application number: 22199844.6
(22) Date of filing: 05.10.2022
(51) Int. Cl.: G08G 5/00

(54) **PILOT FLIGHT PATH FEEDBACK TOOL**

(30) Priority: 22.10.2021 US 202117508524
(71) Applicant: Honeywell International Inc., Charlotte, NC 28202 (US)
(72) Inventor: KAUFFMAN, Donald C., Charlotte, 28202 (US); KOHAGEN, Megan, Charlotte, 28202 (US); GUPTA, Vipul, Charlotte, 28202 (US); JACKSON, Michael R., Charlotte, 28202 (US)
(74) Representative: Haseltine Lake Kempner LLP

(57) **Abstract**

A system that may receive and compile data in-flight from an onboard weather radar device, as well as other information from other sources while an aircraft travels along a flight path. The system may compare the received information to the observed flight path for an aircraft and generate a suggested improved flight path based on the received information. The system may also consider historical information from previous flights, including historical weather information associated with the previous flight paths, amount of fuel used, time enroute, and similar factors. The system may present actual historical flights along with a comparison to a suggested improved flight path for each of the historical flights. The comparison may provide training for flight operations planning, and the flight crew, that showcase the benefits of following the suggested improved flight paths.

## Description

### TECHNICAL FIELD

The disclosure relates to airborne weather radar systems.

### BACKGROUND

Onboard weather radars have historically scanned and collected weather information up to a few hundred miles ahead of an aircraft in flight and displayed this near real-time information to a flight crew in the cockpit. The display may include textual and graphical information as well as, in some examples, colors depicting various aspects of the weather ahead, e.g., the amount of reflectivity.

### SUMMARY

In general, the disclosure describes a system that may receive and compile data in-flight from an onboard weather radar device, as well as additional information from other sources while an aircraft travels along a flight path. In some examples, after the flight, the system may compare the received information to the observed flight path for an aircraft and generate a suggested improved flight path based on the received information. In other examples, the system may compare the received information to a planned flight path for the aircraft, either during pre-flight planning, or during the flight, and generate a suggested improved flight path based on the received information. Whether post-flight, pre-flight, or in flight, the system may extract attributes where the flight path may be improved and use these attributes to generate the suggested improved flight path. The system may also consider historical information from previous flights, including historical weather information associated with the previous flight paths, amount of fuel used, time enroute, and similar factors. The system may present actual historical flights along with a comparison to a suggested improved flight path for each of the historical flights. The comparison may provide training, for flight operations planning and for the flight crew, that showcases the benefits of following the suggested improved flight paths. For example, the improved flight paths may result in reduced fuel usage, improved on-time scheduling, and so on.

In one example, this disclosure describes a method comprising receiving, by processing circuitry, weather data from a weather radar device onboard an aircraft, wherein the weather radar device is configured to collect the weather data observed while following a flight path; receiving, by the processing circuitry, flight data for the same observed flight path; storing, by the processing circuitry, the received weather data and flight data of the observed flight path at a memory location; generating, by the processing circuitry, a suggested flight path, wherein the suggested flight path is based on the stored weather data and flight data of the observed flight path; comparing, by the processing circuitry, the suggested flight path to the observed flight path; calculating, by the processing circuitry, one or more factors based on the comparison; outputting, by the processing circuitry, an electronic signal comprising the observed flight path, the suggested flight path and the one or more factors, wherein the electronic signal is configured to cause the observed flight path, the suggested flight path and the one or more factors to be displayed on a user interface.

In another example, this disclosure describes a computer-readable medium comprising receive weather data from a weather radar device onboard an aircraft, wherein the weather radar device is configured to collect the weather data observed while following a flight path; receive flight data for the same observed flight path; store the received weather data and flight data of the observed flight path at a memory location; generate a suggested flight path, wherein the suggested flight path is based on the stored weather data and flight data of the observed flight path; compare the suggested flight path to the observed flight path; generate one or more factors based on the comparison; output an electronic signal comprising the observed flight path, the suggested flight path and the one or more factors, wherein the electronic signal is configured to cause the observed flight path, the suggested flight path and the one or more factors to be displayed on a user interface.

In another example, this disclosure describes a system comprising a memory; processing circuitry operatively coupled to the memory, the processing circuitry configured to: receive weather data from a weather radar device onboard an aircraft, wherein the weather radar device is configured to collect the weather data observed while following a flight path; receive flight data for the same observed flight path; store the received weather data and flight data of the observed flight path at a memory location; generate a suggested flight path, wherein the suggested flight path is based on the stored weather data and flight data of the observed flight path; compare the suggested flight path to the observed flight path; generate one or more factors based on the comparison; output an electronic signal comprising the observed flight path, the suggested flight path and the one or more factors, wherein the electronic signal is configured to cause the observed flight path, the suggested flight path and the one or more factors to be displayed on a user interface.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example system configured to analyze measured data associated with an aircraft flight path along with historical route information.
FIG. 2 is a conceptual diagram illustrating example aircraft flight path.
FIG. 3 is a conceptual diagram illustrating a comparison of an example aircraft flight path to an improved aircraft flight path.
FIG. 4 is a flowchart illustrating an example operation of the system of this disclosure.

### DETAILED DESCRIPTION

This disclosure describes an aircraft flight path feedback system that, after the completion of an aircraft flight, may use observed flight data and weather data relevant to the flight to generate an improved flight path for the aircraft based on the observed information. In some examples, the flight path feedback system may generate a suggested improved flight path during pre-flight planning, post-flight analysis or while in flight. During the flight, the system may receive and compile data in-flight from an onboard weather radar device, as well as additional information from other sources while an aircraft travels along a flight path. The additional information may include flight data, such as navigation information and engine data, as well as weather information from sources external to the aircraft.

In some examples, the flight path feedback system of this disclosure may be implemented with a computing device for use in flight, e.g., onboard the aircraft or at a control station for an unmanned aerial vehicle (UAV). In some examples, he system may receive and compile the data in-flight from an onboard weather radar device, as well as the other information from other sources while an aircraft travels along a flight path. The onboard weather radar device may scan and collect weather information several hundred nautical miles ahead of an aircraft and display this weather information to the flight crew, which may be in the cockpit of some manned aircraft, or to a flight crew in control of a UAV. The flight path feedback system may receive and use the data from the onboard weather radar device to generate the suggested improved flight path.

In other examples, the flight path feedback system may be implemented with a ground-based computing device for pre-flight or post-flight analysis. In some examples, the flight path feedback system may use ground or satellite based weather information, along with the additional information described above to generate the improved flight path. In other examples, the flight path feedback system may receive and use the data from the onboard weather radar device to generate the suggested improved flight path, e.g., by downloading the data post-flight.

In addition to measured weather information received from the weather radar device, the flight path feedback system may receive information from other sources related to the completed flight. Other information may include forecast weather information, national and international weather information from ground stations, pilot reports, satellite, other aircraft weather radar, traffic and aircraft separation information and so on relevant to the completed flight path. After the flight, the system may compare the received information to the observed flight path for an aircraft and generate the improved flight path based on the received information. The flight path feedback system may compare various factors between the actual flown flight path and the suggested improved flight path to generate the improved flight path. Some examples of factors for comparison may include comparisons of fuel usage, safety margin from severe weather, the time in flight, and so on.

In some examples, the system may also consider historical information from previous flights, including historical weather information associated with the previous flight paths, amount of fuel used, time enroute, and similar factors. The system may analyze how weather, traffic and other factors may have affected each historical flight path and present a suggested improved flight path with changes in course, speed, altitude, and geographic waypoints to improve the historical flight path. As noted above, the flight path feedback system may provide a comparison of various factors between each actual flight path and the suggested improved flight path. The comparison of the historical flight paths, and the recently completed flight path, may provide training for flight operations planning, and the flight crew, that showcase the benefits of following the suggested improved flight paths, e.g., the improved flight paths may result in reduced fuel usage, on-time scheduling, improved passenger comfort and so on. The system may compare all of these factors as a trade-offs. For example, flying closer to weather phenomena to minimize the added distance to divert around the weather may reduce time in flight and fuel usage, but may result in increased turbulence and reduced passenger comfort.

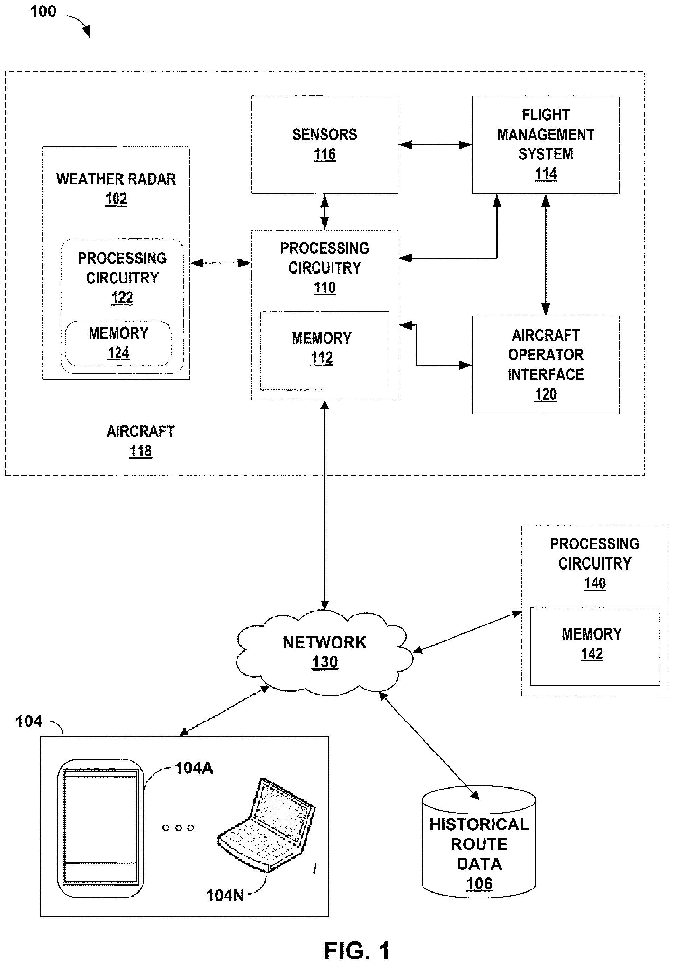

FIG. 1 is a block diagram illustrating an example system configured to analyze measured data associated with an aircraft flight path along with historical flight path information. Some components of system 100 may be airborne, i.e., installed on aircraft 118. In some examples, some components of system 100 may also be ground based or be implemented as some combination of both airborne and ground based, such as network 130. In some examples, some components of system 100 may also be space based, such as on a satellite.

Example system 100 depicted in FIG. 1 includes aircraft 118, which may have onboard processing circuitry 110, which is operatively connected to memory unit 112, flight management system (FMS) 114, aircraft operator interface 120, sensors 116 and weather radar 102. In the example of system 100, processing circuitry 110 may communicates with network 130, either while in flight or on the ground. Processing circuitry 110 may also communicate to other systems not shown in FIG. 1, such as via transponders, and other communication links. The example of system 100 is arranged as one implementation of a system of this disclosure. In other examples, the components of system may be arranged in a variety of ways, FMS 114 may be broken into several other components, or there may be additional components not shown in FIG. 1. In some examples FMS 114 may include Air Traffic Management (ATM) functionality as well as navigation information to reduce pilot workload such as vectors-to-final approaches, holding procedures, and similar functions.

Examples of processing circuitry 110, 140 and 122 may include any one or more of a microcontroller (MCU), e.g. a computer on a single integrated circuit containing a processor core, memory, and programmable input/output peripherals, a microprocessor (µP), e.g. a central processing unit (CPU) on a single integrated circuit (IC), a controller, a digital signal processor (DSP), an application specific integrated circuit (ASIC), a fieldprogrammable gate array (FPGA), a system on chip (SoC) or equivalent discrete or integrated logic circuitry. A processor may be integrated circuitry, i.e., integrated processing circuitry, and that the integrated processing circuitry may be realized as fixed hardware processing circuitry, programmable processing circuitry and/or a combination of both fixed and programmable processing circuitry. Though not described in detail, other components of system 100 may also include separate processing circuitry. For example, aircraft operator interface 120, user interface devices 104, and FMS 114 may also include one or more processors. Some examples of sensors 116 may also include one or more processors.

Memory unit 112, 142 and 124 may comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. In other words, the memory unit of system 100 are a computer readable storage media operatively coupled to respective processing circuitry, e.g., 110, 140 and 122, respectively, as well as other processing circuitry that may be included in other components of system 100. In some examples, a database, such as historical flight path data 106 may be hosted on one or more servers. Though shown as a separate entity in the example of FIG. 1, historical flight path data 106, or a subset of historical flight path data 106, may be stored at memory 112, 142 and/or memory 124.

Sensors 116 may include space, airborne and ground based sensors. To simplify the explanation of FIG. 1, sensors 116 is shown as a single block. Some examples of information from sensors 116 may include location, course and speed of the aircraft that includes system 100, e.g., from inertial navigation systems and GPS, as well as air pressure, air temperature, engine performance, fuel capacity remaining, distance above mean sea level (MSL), distance above ground level (AGL), weather information, traffic location, course speed and predicted path, and similar information. In some examples, information from sensors 116, such as engine performance and navigation information, may also be sent to FMS 114. Sensors 116 may also receive commands from processing circuitry 110 and FMS 114 to collect specified information, change sensor settings and other commands.

In some examples, user interface devices 104A-104N (collectively user interface devices 104) may include a wide variety of user interface devices. For example, user interface devices 104 may include tablet computers, laptop computers, phones, EFBs, augmented reality headsets or virtual reality headsets, or other types of user interface devices. In some examples, user interface devices 104 may provide training to a user, such as a flight crew, aircraft operations center personnel and so on. The training may improve the user's understanding and use of weather radar 102, as well as a suggested route tool associated with the weather radar 102 and system 100. The suggested route tool may include programming instructions executed by processing circuitry of system 100 to provide in-flight or pre-flight planning suggestions for flight paths that take into account an optimum balance between various flight path factors, as described above.

Network 130 may include any number of different types of network connections, including satellite connections and Wi-Fi^{™} connections. For example, network 130 may include networks established using geosynchronous satellites, low-earth orbit satellites, global navigation satellite systems, cellular base station transceivers (e.g., for 3G, 4G, LTE, and/or 5G cellular network access), BLUETOOTH, or other communication protocols and/or Wi-Fi^{™} access points. In turn, the geosynchronous satellites and low-earth orbit satellites can communicate with gateways that provide access to network 130 for one or more devices implementing the collision awareness system. Cellular base station transceivers can have connections that provide access to network 130. These various satellite, cellular, and Wi-Fi network connections can be managed by different third-party entities, referred to herein as "carriers." In some examples, network 130 may include a wired system.

Weather radar 102 may be a weather radar system that may include processing circuitry 122 and memory 124 as well as a weather radar antenna (not shown in FIG. 1) configured to transmit a radar signal and receive the reflected radar returns. In some examples, weather radar 102 may transmit a "pencil" beam in a pattern over the radar field of view (FOV), such as a raster pattern. In other examples, weather radar 102 may transmit a high aspect ratio beam and sweep the beam in the azimuth direction. The high aspect ratio beam may be wider in the elevation direction and narrower in the azimuth direction. In some examples, the weather radar antenna may be mounted on a gimbaled mount and mechanically moved to point the radar transmit beam. In other examples, the weather radar antenna may use a phase shift, or other electronic means to point the radar transmit beam. In other examples, the weather radar antenna may use a combination of mechanical and electronic means to aim the radar transmit beam.

In some examples, onboard weather radar may scan and collect weather information up to 300 or more nautical miles (nm) ahead and around an aircraft in flight and display this information to the flight crew in the cockpit, or at a ground station. In some examples, weather radar 102 may include a built-in user interface including controls and a display. Weather radar 102 of this disclosure may be equipped to send collected weather and other collected data offboard the aircraft such as processing circuitry 140 via network 130 or to other systems onboard, such as processing circuitry 110, aircraft operator interface 120 and flight management system 114. With this increased connectivity, weather radar 102 may provide additional benefits that may improve flight planning by providing digital weather information.

Processing circuitry 140, may execute instructions, e.g., stored at memory 142, to provide feedback to pilots on previously flown routes and provide suggestions to improve flight path selection and usage of onboard flight path optimization with respect to factors such fuel, time, weather, traffic, and other additional factors. For example, commercial passenger and freight carriers may find it desirable to have actual arrival times be close to planned arrival times, e.g., within a duration tolerance, to arrange for connecting flights and delivery schedules.

The system of this disclosure may provide feedback post-flight, during pre-flight planning or while in flight. Processing circuitry 140 of system 100 may analyze weather, traffic, and other factors and suggest alternate flight paths given these factors. System 100 may provide the analysis, and highlight behaviors that may lead to better flight paths, where "better" may mean reduced fuel consumption, shorter time enroute, wider safety margin from weather such storms and turbulence. System 100 may provide flight path analysis via user interface devices 104, to provide training to flight crews on how to best select flight paths and use onboard flight path optimization given attributes of oncoming weather such as direction, speed, etc. In this disclosure, "optimization" may describe determining a balance between safety margin, time, distance fuel usage and so on. For example, an excessively wide safety margin around a storm may result in an undesirable usage of fuel and a late arrival. Similarly, an excessive focus on the cost of the flight may reduce safety margins. System 100 may use stored onboard weather radar data, including recorded weather cell trending and tracking, from weather radar 102. Such information from a weather radar 102 of this disclosure may have previously been unavailable except for in-flight cockpit display.

System 100 may also provide training and feedback to airline operations planners. In some examples, an aircraft's flight path may be determined a few hours in advance by an airline's airline operation center (AOC). Weather forecasted along the planned flight path may be accounted for so that the planned flight path avoids severe weather. During flight, the flight crew is in contact with an airline's dispatcher to make any flight path change decisions due to weather or traffic. System 100 may provide feedback by comparing previously flown flight paths to suggested flight paths that meet the objective of safe routing, and provide suggestions to optimize the trade-offs, as discussed above.

In some examples, system 100 may also analyze an aggregate benefit of using the improved flight paths across multiple aircraft in an aircraft fleet. That is, system 100 may provide an analysis for a commercial aircraft operator, e.g., a freight carrier, passenger airline, and so on, to assess for their fleet the total benefit if the aircraft in the fleet use the flight path optimization tool during flight. In other words, system 100 may output the aggregate benefit that could be obtained by using the suggested flight paths for the set of historical flights.

An advantage of the system 100 of this disclosure is that system 100 may provide analysis and techniques to improve future flights by learning from the previous flight as well as, in some examples, historical flights flown, thereby improving flights over time in terms of reduced cost of operations and reduced exposure to hazardous conditions. A technical differentiator from other types of systems includes that weather radar 102 may have connectivity to other systems of the aircraft and the ability to provide weather cell trending and tracking data, as well as forecasts, in real-time operation. In addition, system 100 may provide the aircraft flight path in three dimensions in comparison to the weather data during the flight. So, for post-flight analysis, system 100 may analyze data the flight crew saw while in flight. Also, the combined flight track and weather situation may be stored, e.g., at historical flight path data 106, for later use. As noted above, the flight track and weather situation data may come from ground and satellite based weather information. In some examples, system 100 may also receive and store weather data from onboard weather sensors such as the onboard weather radar.

Processing circuitry 140 may execute programming instructions, e.g., stored at memory 142 to receive weather data from a weather radar device, e.g., weather radar 102 onboard aircraft 118. As described above, weather radar 102 is configured to collect the weather data observed while following the flight path of aircraft 118. Processing circuitry 140 may also receive flight data for the same observed flight path, e.g., navigation, engine performance, fuel usage, time of flight, information from sensors 116 and so on. Processing circuitry 140 may store the received weather data and flight data of the observed flight path at a memory location of memory 142. Based on the stored weather data and flight data of the observed flight path, processing circuitry 140 may generate a suggested flight path which may differ from the actual observed flight path flown.

Processing circuitry 140 may compare the suggested flight path to the observed flight path and generate one or more factors based on the comparison. Some examples of the factors may include an amount of fuel used, a duration of the flight, the time of flight takeoff (T/O) to touchdown (T/D), altitude changes, deviations for traffic and exposure to weather hazards, which may include magnitude and duration of any encountered turbulence. Other factors analyzed by processing circuitry of system 100 may also include: total duration of flight in weather hazards of different types (e.g. radar return level X, icing severity Y, turbulence level Z, volcanic ash, exposure to lightning, hail, high altitude ice crystals, etc.) as well as minimum miss distance to weather hazards of different types.

Processing circuitry 140 may output an electronic signal comprising the observed flight path, the suggested flight path and the one or more factors, e.g., to network 130. The electronic signal may be retrieved by one of user interfaces 104 and cause the observed flight path, the suggested flight path and the one or more factors to be displayed on a user interface. In some examples, the user interface may include controls to manipulate, enhance, filter or otherwise adjust the display. For example, a user, such as the flight crew, operations personnel and so on, may zoom in to a portion of the flight path, enter various what-if adjustments and so on.

Some technical benefits that system 100 provides may include techniques for analyzing flights flown as well as techniques to compare actual flight paths to optimal calculated flight paths for flights. In some examples, the processing circuitry of system 100 may execute instructions to improve analysis and calculate future flight routing as the number of flights added to historical flight path data 106 grows. In some examples processing circuitry 140 of system 100 may employ one or more artificial intelligence (AI) techniques to develop and calculate future flight routing, based on specified circumstances, where the circumstances may include current weather, weather forecasts, air traffic, terrain, type of aircraft, crew experience and so on. In addition, system 100 may extract pilot behaviors, and suggest decision points that lead to better flights with respect to fuel, time, and hazard exposure.

The system may also consider historical information from previous flights including historical weather information associated with the previous flight paths, amount of fuel used, time enroute, and similar factors. The system may analyze how weather, traffic and other factors may have affected the historical flight paths and use the analysis to suggest changes in course, speed, altitude, and geographic waypoints to improve the planned flight path. In some examples, the historical flight path information may be used to train a machine learning system, such as a neural network, executed by processing circuitry 140. In other examples, processing circuitry 140 may generate the suggested flight path, i.e. calculated flight path, based on an optimization algorithm between at least two factors of the one or more factors described above, e.g., amount of fuel, exposure to weather and so on.

As described above, system 100 may generate suggested routes for pre-flight planning, in flight as well as post-flight training. Computing power for ground-based pre-flight planning and post-flight analysis may be greater than that available onboard a manned aircraft during flight. In other words, processing circuitry 140 may be implemented in a computing device that is larger, consumes more electrical power, requires greater cooling needs, and is heavier than the computing device for processing circuitry 110 on board aircraft 118. Therefore the flight path feedback system of this disclosure may be implemented onboard aircraft 118 as a stand-alone computing device with processing circuitry connected to and communicating with other processing circuitry aboard aircraft 118. In other examples, the flight path feedback system of this disclosure may be implemented onboard aircraft 118 as software executed by existing processing circuitry aboard aircraft 118. Either way, the flight path feedback system of this disclosure may include a trained machine learning system e.g., a neural network or similar artificial intelligence system configured to operate using processing circuitry aboard aircraft 118 to generate the improved flight path based on the factors described above.

The flight path feedback system may be provided as differentiated software enabled offerings services delivered via cloud or private enterprise network. In some examples, the flight path feedback system, as well as updates and improvements to the flight path feedback system may be available thru cloud or direct, remote connection. In other examples, the flight path feedback system may include infrastructure enabling connected services, such as secure, scalable infrastructure for collecting, aggregating and storing data, and allowing connected devices to communicate. The flight path feedback system may be implemented as any of SaaS, infrastructure as a service (IaaS), platform as a service (PaaS), data lakes and so on. SaaS may use networking to deliver applications, which may be managed by a third-party vendor. Some SaaS applications may run directly through a web browser, which means they do not require any downloads or installations on the client side. PaaS may provide cloud based components for some software and may deliver a framework for developers to use to create customized applications. All servers, storage, and networking may be managed by either the airline or a third-party provider. In some examples, developers maintain management of the applications.

IaaS may allow businesses to purchase resources on-demand and as-needed instead of having to buy and maintain the computing hardware. IaaS may provide networked computing infrastructure, such as servers, network, operating systems, and storage, and so on. The servers may be provided to the airline with similar same capabilities as a data center but without the airline being required maintain or manage all the hardware.

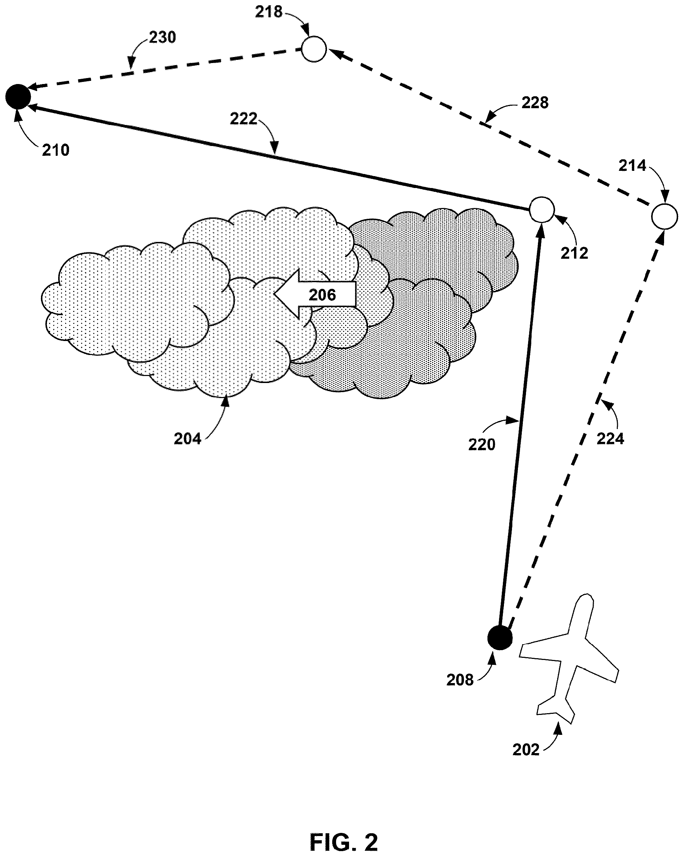

FIG. 2 is a conceptual diagram illustrating example aircraft flight paths. The aircraft flight paths in FIG. 2 begin at departure point 208 and end at destination point 210. A first flight path includes segments 220 and 222 along with geographic waypoint 212. A second flight path includes segments 224, 228 and 230, with geographic waypoints 214 and 218. In some examples, the segments may include altitude changes and altitude waypoints, not shown in FIG. 2. Each flight path may also include additional segments, for example, based on airport departure procedures at departure point 208 and airport arrival procedures at destination point 210 (not shown in FIG. 2). Some examples of additional segments may include aircraft routing for noise control, or to avoid terrain, holding patterns while waiting to land, and so on.

In some examples, a cost effective flight path may be a straight flight path, or approximately straight great circle route, from departure point 208 to destination point 210. However, some geographic and/or altitude waypoints may be included in a flight path to avoid mountains, or for other reasons. In the example of FIG. 2, weather cell 204 is storm which is trending in the direction indicated by 206. During planning, a flight crew, and in some examples, along with the airline operation center, may include geographic waypoints to avoid the storm. In some examples, an aircraft may fly over a storm. In other examples, such as with towering cumulus clouds, the tops can reach above 30,000 feet, and create turbulence and hazardous conditions above those altitudes. Therefore, routing around some types of weather may provide a safety factor and increase crew and passenger comfort.

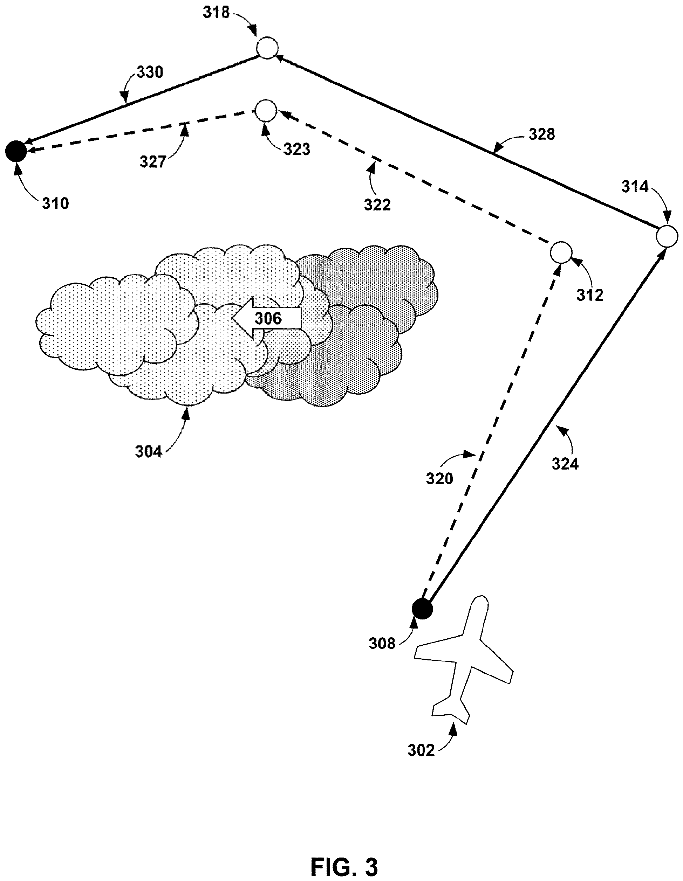

In the example of FIG. 2, a flight crew may plan an aircraft flight path to follow the first flight path from departure point 208, destination point 210 along segments 220 and 222. As described above in relation to FIG. 1, after the completion of an aircraft flight, processing circuitry, e.g., processing circuitry 140 described above in relation to FIG.1, may use observed flight data and weather data relevant to the flight to calculate an improved flight path for the aircraft based on the observed information. In the example of FIG. 2, the suggested flight path includes segments 224, 228 and 230, along with geographic waypoints 214 and 218. The suggested (calculated) flight path of FIG. 2 may include a longer distance and increased fuel use by balancing the trade-off of an increased distance from weather cell 204. Increasing the distance from weather cell 204 may provide increased safety margin, reduced turbulence, and possibly reduced risk of damage from hail, reduced risk of lightning strikes, and so on. In other examples processing circuitry of the flight path feedback system of this disclosure may analyze a planned flight path and provide suggested improved flight paths during pre-flight planning or while in flight. The description of FIGS. 2 and 3 will focus on the example of post-flight planning to simplify the description.

The processing circuitry of the aircraft flight path feedback system may analyze the observed aircraft flight path based on flight data and weather data retrieved from the aircraft, e.g., via a datalink or network. As described above in relation to FIG. 1, an onboard aircraft weather radar of this disclosure may collect weather information while following the observed flight path for the aircraft. In some examples, the weather information may include one or more of storm pattern reflectivity and predicted storm track, e.g., the direction 206 of storm cell 204. Processing circuity of the system may receive the weather cell trending, tracking and other weather data from the weather radar system, e.g., weather radar 102 of FIG. 1, compile the weather information along with other flight data such as ground track, altitude etc., and store the data information at the historical flight path database. Weather information may also include information collected from other sensors, e.g., sensors 116 of FIG. 1, such as level of turbulence, air temperature and so on, as well as off-board weather information such as from ADS-B.

In some examples, trajectory analysis of the first aircraft route of FIG. 2, along segments 220 and 222, may indicate that the aircraft route passed closer than it should have to storm cell 204. In some examples, the aircraft flight path feedback system of this disclosure may calculate suggested adjustments to the observed aircraft flight path, based on an optimization algorithm that includes two or more of the factors described above in relation to FIG. 1, e.g., fuel consumption, time of flight, and so on. In other examples, the aircraft flight path feedback system may apply modeling techniques such as a neural network or other machine learning programming instructions. The aircraft flight path feedback system may also apply other artificial intelligence techniques, in addition to or instead of machine learning to calculate the suggested flight path.

FIG. 3 is a conceptual diagram illustrating a comparison of an example aircraft flight path to a calculated aircraft flight path. Similar to the example of FIG. 2, FIG. 3 depicts a first flight path, with departure point 308 and destination point 310, that includes route segments 324, 328 and 330, with geographic waypoints 314 and 318. A second flight path with the same departure point 308 and destination point 310 includes route segments 320, 322 and 327 along with geographic waypoints 312 and 323. The aircraft flight paths avoid storm cell 304, which is tracking in direction 306, in the example of FIG. 3.

As described above in relation to FIGS. 1 and 2, information associated with an aircraft flight path may include one or more route factors. Some examples of route factors may include the amount of fuel used during the flight, the time of flight takeoff (T/O) to touchdown (T/D), and the exposure to weather hazards as described in more detail above in relation to FIG. 1. Exposure to weather hazards may include metrics related to define a distance from the hazard, an amount of time in proximity to a hazard, where the proximity may be a threshold distance. Other metrics may include severity of turbulence, updrafts, downdrafts, amount of rain, hail, and so on. The processing circuitry of the system of this disclosure may execute instructions stored at a memory to compare route factors for the observed aircraft route to a calculated suggested route.

In the example of FIG. 3, a flight crew may have flown along a first flight path that includes route segments 324, 328 and 330, with geographic waypoints 314 and 318. However, based on the weather cell tracking and trending received from the weather radar system on board the aircraft, e.g., that storm cell 304 is moving away from the planned route of flight in direction 306, the processing circuitry analyzing the weather data and flight data observed during the flight may generate a calculated flight path for the aircraft to follow the second route, which includes route segments 320, 322 and 327 along with geographic waypoints 312 and 323. When comparing the route factors, the processing circuitry may display information that the suggested flight path may maintain a safe distance from updated track of storm cell 304 and improve the other factors, e.g., fuel consumption and on-time arrival.

In some examples, the processing circuitry of the aircraft flight path feedback system may also receive additional weather information from other sources, in addition to information directly collected by the weather radar, as described above in relation to FIG. 1. The processing circuitry may include the additional information when generating the suggested route. Examples of other sources may include Automatic Dependent Surveillance-Broadcast (ADS-B), an electronic flight bag (EFB), subscription weather services and so on. Some other examples of additional information may include area weather information, jet stream activity, position of highs, position of lows, position of troughs, position of fronts, SIGMETs, AIRMETS, and types of fronts.

AIRMETS and SIGMETS are weather bulletins issued by the Aviation Weather Center (AWC) and may be received before or during a flight. An AIRMET is airman's meteorological information. The AWC issues AIRMETs for weather that may affect aircraft safety. An AIRMET may describe weather conditions that must be flown using instruments because the visibility is not enough for visual flying, and may include mountain obscuration. AIRMETs may also describe the location of areas with moderate turbulence and icing and freezing levels. A SIGMET describes convective or nonconvective significant meteorological information. SIGMETs may describe areas with severe icing, severe or extreme turbulence and low level wind shear. SIGMETs may also describe areas at risk for dust storms and/or sandstorms lowering visibilities to less than three (3) miles as well as volcanic ash. The dust storm and volcanic ash SIGMETs are significant weather because ash and sand can cripple aircraft engines.

The processing circuitry may also receive other information affecting aircraft routing, such as temporary flight restrictions (TFR), notices to airmen (NOTAMs) and other information that may drive changes to route segments and geographic and altitude waypoints. The processing circuitry may compare the additional weather and other information to the information associated with the observed aircraft flight path stored at the memory.

In some examples the processing circuitry, e.g., processing circuitry 140 may execute a variety of algorithms and combinations of algorithms to analyze, compare and suggest alternate aircraft flight paths. As noted above, the system may collect information, e.g., from the weather radar systems onboard aircraft for flown aircraft routes. Some of this information may include trajectory data, e.g., altitudes, speed, direction, location and so on. Information may also include the weather radar data, surveillance data, or other relevant onboard or offboard data.

In other examples, the processing circuitry may execute artificial intelligence routines, such as decision theory and machine language routines such as supervised or unsupervised learning, reinforcement learning, neural networks or other algorithm types. In some examples, given historical flights and optimized routes for those flights, the machine learning algorithm, or algorithms, may detect characteristics from available factors that lead to more optimal routes. Available factors may include fuel, time, duration in severe weather, distance to weather and so on. From the learning algorithm results, another learning algorithm may extract the behaviors such as points in time where decision points should have been taken, along with scenarios occurring at that time and may calculate one or more suggested aircraft routes that may optimize the route. As described above in relation to FIG. 1, "optimization" in this disclosure may consider factors and weightings for factors such as balance trade-offs between safety margin, time, distance fuel usage and so on. In some examples, the processing circuitry may use artificial intelligence routines to change factors considered and/or weight assigned to the factors. In other examples, one or more users may analyze the results and also adjust the algorithms and modeling. Also, as described above in relation to FIGS. 1 and 2, a machine language model may be trained using flight data and weather data, such as historical flight paths collected from multiple aircraft.

Given an offline trained behavior model, the processing circuitry may collect flight data from flights either post-flight or in-flight and sent to a data storage device, such as historical route data 106 and/or memory 112 and 124 described above in relation to FIG. 1. In some examples the system processing circuitry may retrieve the data and execute a prediction function of behavior algorithm to output recommendations for future flights, or for changes in an ongoing flight plan. In some examples, the processing circuitry may deliver results via an analytics tool executing on, for example user interface devices 104 either offline, or during the flight, as well as via aircraft operator interface 120 while in flight as described above in relation to FIG. 1.

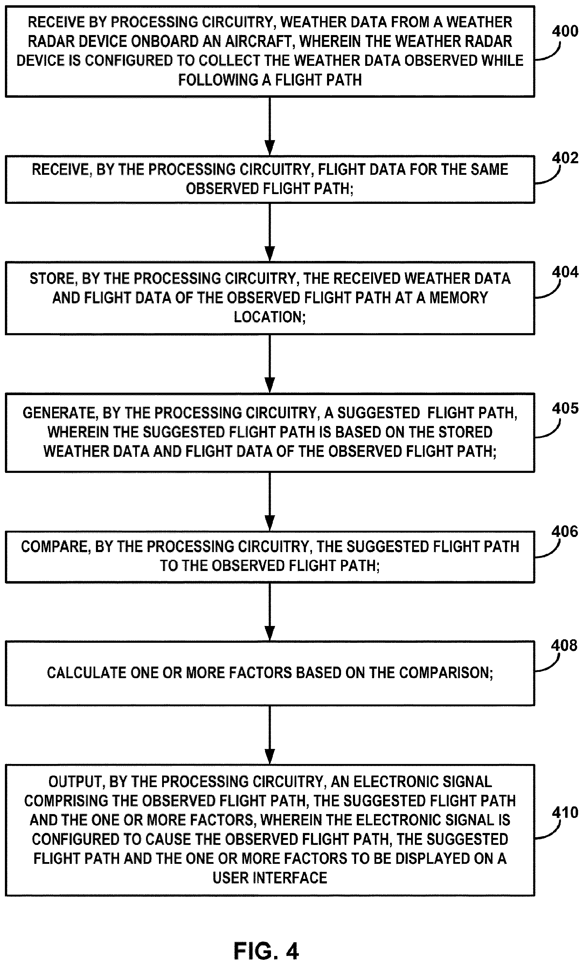

FIG. 4 is a flowchart illustrating an example operation of the system of this disclosure. The blocks of FIG. 4 will be described in terms of FIG. 1, unless otherwise noted.

Processing circuitry of system 100, such as processing circuitry 110 or other processing circuitry not shown in FIG. 1, may receive information from a weather radar system, e.g., weather radar 102 onboard an aircraft (400). In some examples, processing circuitry 122 of weather radar 102 may collect the weather data based on radar returns from transmitted radar signals while following a flight path for the aircraft. Processing circuitry 122 may output reflectivity values, weather cell trending and predicted storm track data to processing circuitry 110. In some examples, processing circuitry 110 may receive additional flight data for the same observed flight path, e.g., from sensors 116 and other off-aircraft sources (402), such as navigation information, GPS, temperature and so on.

Processing circuitry of system 100 may store the received weather data and flight data of the observed flight path at a memory location (404). In some examples, processing circuitry 122 of weather radar 102 may store the observed weather data at memory 124. In some examples processing circuitry 122, may transfer the weather data to processing circuitry 110 and processing circuitry 140 for storage at a memory location, such as at memory 142.

Processing circuitry 140 may generate a suggested flight path based on the stored weather data and flight data of the observed flight path (405). As described above in relation to FIGS. 1 - 3, processing circuitry 140 may calculate the suggested flight path based on an optimization algorithm between at least two factors of the one or more factors. In other examples, processing circuitry 140 may apply artificial intelligence techniques to generate the suggested flight path.

Processing circuitry 140 may compare the suggested flight path to the observed flight path (406). Processing circuitry 140 may calculate factors for each of the suggested flight path and observed flight path such as an amount of fuel used, flight duration, exposure to weather hazards and so on to provide metrics for comparison of the suggested flight path and the observed flight path (408).

In some examples processing circuitry 140 may also execute programming instructions to compare historical flight paths from other previous flights to a suggested flight path for each respective historical flight path. In some examples processing circuitry 140 may generate a score, or set of scores for each of the observed flight path and the suggested flight path. The scoring may be similar to a grade, such as a grade or ranking for each flight path as a means for comparison. For example processing circuitry 140 may assign a grade of 1 - 100, "A, B, C" or some similar means of scoring each flight path based on balancing the various factors for each flight path.

Processing circuitry 140 may output an electronic signal configured to be received by user interfaces 104 (410). The electronic signal may include data regarding the observed flight path, the suggested flight path and the one or more factors to be displayed on a user interface. The electronic signal may also include each historical flight path, each respective suggested flight path and metrics for comparison which may include each of the respective one or more factors for each historical flight path and the associated suggested flight path. Such a comparison of historical flights may provide useful training for a flight crew and operations center personnel. As described above in relation to FIG. 1, the user interface may be configured to filter, enhance certain portions and otherwise manipulate the output electronic signal to focus on certain aspects of each flight path. In some examples, the user interface may accept input from the user with changes to the flight path see the impact on the trade-offs and the resulting changes in the metrics for a flight path.

In one or more examples, the functions described above may be implemented in hardware, software, firmware, or any combination thereof. For example, the various components of FIG. 1 and 2, such as processing circuitry 110, processing circuitry 140 and so on may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

The term "non-transitory" may indicate that the storage medium is not embodied in a carrier wave or a propagated signal. In certain examples, a non-transitory storage medium may store data that can, over time, change (e.g., in RAM or cache). By way of example, and not limitation, such computer-readable storage media, may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," and "programmable processor" as used herein, may refer to any of the foregoing structures or any other structure suitable for implementation of the techniques described herein. Also, the techniques could be fully implemented in one or more circuits or logic elements.

The techniques of this disclosure may be implemented in a wide variety of devices or apparatuses, including, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Example 1: A method comprising receiving, by processing circuitry, weather data from a weather radar device onboard an aircraft, wherein the weather radar device is configured to collect the weather data observed while following a flight path; receiving, by the processing circuitry, flight data for the same observed flight path; storing, by the processing circuitry, the received weather data and flight data of the observed flight path at a memory location; generating, by the processing circuitry, a suggested flight path, wherein the suggested flight path is based on the stored weather data and flight data of the observed flight path; comparing, by the processing circuitry, the suggested flight path to the observed flight path; calculating, by the processing circuitry, one or more factors based on the comparison; outputting, by the processing circuitry, an electronic signal comprising the observed flight path, the suggested flight path and the one or more factors, wherein the electronic signal is configured to cause the observed flight path, the suggested flight path and the one or more factors to be displayed on a user interface.

Example 2: The method of example 1, wherein the user interface is configured to provide training to a user for the use of: the weather radar device, and a suggested route tool associated with the weather radar device.

Example 3: The method of any of examples 1 and 2, wherein the suggested flight path is a first suggested flight path, the method further includes retrieving, by the processing circuitry and from the memory location, data indicative of a plurality of historical flight paths; for each historical flight path of the plurality of historical flight paths, generating, by the processing circuitry, a respective suggested flight path; comparing, by the processing circuitry, each respective suggested flight path to the respective historical flight path; calculating, by the processing circuitry, one or more factors based on each comparison; outputting, by the processing circuitry, the electronic signal, wherein the electronic signal further comprises each historical flight path, each respective suggested flight path and each of the respective one or more factors.

Example 4: The method of any of combination of examples 1 through 3, wherein the one or more factors comprise: an amount of fuel used, a duration, the time of flight takeoff (T/O) to touchdown (T/D), and exposure to weather hazards.

Example 5: The method of any of combination of examples 1 through 4, wherein generating the suggested flight path comprises generating the suggested flight path based on an optimization algorithm between at least two factors of the one or more factors.

Example 6: The method of any of combination of examples 1 through 5, wherein generating the suggested flight path comprises generating the suggested flight path based on a machine learning algorithm, and wherein the machine learning algorithm is trained based on a plurality of historical flight paths.

Example 7: The method of any of combination of examples 1 through 6, wherein the machine learning algorithm comprises a neural network.

Example 8: The method of any of any of combination of examples 1 through 7, wherein the weather data from the weather radar system onboard the aircraft comprises one or more of: storm pattern reflectivity, predicted storm track, weather cell trending and weather cell tracking, and wherein receiving the weather data further comprises receiving additional weather information includes area weather information, jet stream activity, position of highs, position of lows, position of troughs, position of fronts, SIGMETs, AIRMETS, and types of fronts.

Example 9: A computer-readable medium includes receive weather data from a weather radar device onboard an aircraft, wherein the weather radar device is configured to collect the weather data observed while following a flight path; receive flight data for the same observed flight path; store the received weather data and flight data of the observed flight path at a memory location; generate a suggested flight path, wherein the suggested flight path is based on the stored weather data and flight data of the observed flight path; compare the suggested flight path to the observed flight path; generate one or more factors based on the comparison; output an electronic signal comprising the observed flight path, the suggested flight path and the one or more factors, wherein the electronic signal is configured to cause the observed flight path, the suggested flight path and the one or more factors to be displayed on a user interface.

Example 10: The computer-readable medium of example 9, wherein the user interface is configured to provide training to a user for the use of: the weather radar device, and a suggested route tool associated with the weather radar device.

Example 11: The computer-readable medium of any of examples 9 and 10, wherein the suggested flight path is a first suggested flight path, the programming instructions further causing the programmable processor to: retrieve from the memory location, data indicative of a plurality of historical flight paths; for each historical flight path of the plurality of historical flight paths, generate a respective suggested flight path; compare each respective suggested flight path to the respective historical flight path; generate one or more factors based on each comparison; output the electronic signal, wherein the electronic signal further comprises each historical flight path, each respective suggested flight path and each of the respective one or more factors.

Example 12: The computer-readable medium of any combination of examples 9 through 11, wherein the one or more factors comprise: an amount of fuel used, a duration, the time of flight takeoff (T/O) to touchdown (T/D), and exposure to weather hazards.

Example 13: The computer-readable medium of any of examples 9 through 12, wherein generating the suggested flight path comprises generating the suggested flight path based on an optimization algorithm between at least two factors of the one or more factors.

Example 14: The computer-readable medium of any combination of examples 9 through 13, wherein generating the suggested flight path comprises generating the suggested flight path based on a machine learning algorithm, and wherein the machine learning algorithm is trained based on a plurality of historical flight paths.

Example 15: The computer-readable medium of any combination of examples 9 through 14, wherein the machine learning algorithm comprises a neural network.

Example 16: The computer-readable medium any combination of examples 9 through 15, wherein the weather data from the weather radar system onboard the aircraft comprises one or more of: storm pattern reflectivity, predicted storm track, weather cell trending and weather cell tracking, and wherein receiving the weather data further comprises receiving additional weather information includes area weather information, jet stream activity, position of highs, position of lows, position of troughs, position of fronts, SIGMETs, AIRMETS, and types of fronts.

Example 17: A system includes a memory; processing circuitry operatively coupled to the memory, the processing circuitry configured to: receive weather data from a weather radar device onboard an aircraft, wherein the weather radar device is configured to collect the weather data observed while following a flight path; receive flight data for the same observed flight path; store the received weather data and flight data of the observed flight path at a memory location; generate a suggested flight path, wherein the suggested flight path is based on the stored weather data and flight data of the observed flight path; compare the suggested flight path to the observed flight path; generate one or more factors based on the comparison; output an electronic signal comprising the observed flight path, the suggested flight path and the one or more factors, wherein the electronic signal is configured to cause the observed flight path, the suggested flight path and the one or more factors to be displayed on a user interface.

Example 18: The system of example 17, wherein generating the suggested flight path comprises generating the suggested flight path based on an optimization algorithm between at least two factors of the one or more factors.

Example 19: The system of any of examples 17 and 18, wherein generating the suggested flight path comprises generating the suggested flight path based on a machine learning algorithm, and wherein the machine learning algorithm is trained based on a plurality of historical flight paths.

Example 20: The system of any combination of examples 17 - 19, wherein the machine learning algorithm comprises a neural network.

Various examples of the disclosure have been described. These and other examples are within the scope of the following claims.

## Claims

1. A method comprising:
receiving, by processing circuitry, weather data observed on a flightpath of an aircraft while the aircraft follows the flight path;
receiving, by the processing circuitry, flight data for the aircraft while the aircraft follows the flight path;
storing, by the processing circuitry, the received weather data and the flight data at a memory;
generating, by the processing circuitry, a suggested flight path, wherein the suggested flight path is based on the stored weather data and the flight data of the observed flight path;
comparing, by the processing circuitry, the suggested flight path to the flight path;
calculating, by the processing circuitry, one or more factors based on the comparison; and
outputting, by the processing circuitry, an electronic signal comprising the observed flight path, the suggested flight path, and the one or more factors, wherein the electronic signal is configured to cause the observed flight path, the suggested flight path, and the one or more factors to be displayed on a user interface.

2. The method of claim 1, wherein the user interface is configured to provide training to a user for the use of:
a weather radar device on board the aircraft, and
a suggested route tool associated with the weather radar device.

3. The method of claim 1, wherein the suggested flight path is a first suggested flight path, the method further comprising:
retrieving, by the processing circuitry and from the memory, data indicative of a plurality of historical flight paths;
for each historical flight path of the plurality of historical flight paths, generating, by the processing circuitry, a respective suggested flight path;
comparing, by the processing circuitry, each respective suggested flight path to the respective historical flight path;
calculating, by the processing circuitry, respective one or more factors based on each comparison; and
outputting, by the processing circuitry, the electronic signal, wherein the electronic signal further comprises each historical flight path, each respective suggested flight path and each of the respective one or more factors.

4. The method of claim 3, further comprising:
analyzing an aggregate benefit of using the suggested flight path for each historical flight, and
outputting the aggregate benefit obtained by using the suggested flight paths for the set of historical flights.

5. The method of claim 1, wherein the one or more factors comprise: an amount of fuel used, a duration, a time of flight from takeoff (T/O) to touchdown (T/D), and exposure to weather hazards.

6. The method of claim 1, wherein generating the suggested flight path comprises generating the suggested flight path based on an optimization algorithm between at least two factors of the one or more factors.

7. The method of claim 1,
wherein generating the suggested flight path comprises generating the suggested flight path based on a machine learning algorithm, and
wherein the machine learning algorithm is trained based on a plurality of historical flight paths.

8. The method of claim 1,
wherein receiving the weather data comprises receiving one or more of area weather information, jet stream activity, position of high pressure areas, position of low pressure areas, position of troughs, position of fronts, SIGMETs, AIRMETS, and types of fronts.

9. A computer-readable medium storing instructions that when executed by one or more processors cause the one or more processors to:
receive weather data from a weather radar device onboard an aircraft, wherein the weather radar device is configured to collect the weather data observed on a flight path of the aircraft;
receive flight data for the aircraft while the aircraft follows the flight path;
store the received weather data and the flight data at a memory;
generate a suggested flight path,
wherein the suggested flight path is based on the stored weather data and the flight data of the observed flight path
wherein generating the suggested flight path comprises generating the suggested flight path based on a machine learning algorithm, and
wherein the machine learning algorithm is trained based on a plurality of historical flight paths;
compare the suggested flight path to the observed flight path;
generate one or more factors based on the comparison; and
output an electronic signal comprising the observed flight path, the suggested flight path and the one or more factors, wherein the electronic signal is configured to cause the observed flight path, the suggested flight path and the one or more factors to be displayed on a user interface.

10. The computer-readable medium of claim 9, wherein the user interface is configured to output the electronic signal during one or more of: pre-flight planning, and while in flight along the observed flight path.

11. The computer-readable medium of claim 9, wherein the suggested flight path is a first suggested flight path, the programming instructions further causing the programmable processor to:
retrieve from the memory, data indicative of a plurality of historical flight paths;
for each historical flight path of the plurality of historical flight paths, generate a respective suggested flight path;
compare each respective suggested flight path to the respective historical flight path;
calculate respective one or more factors based on each comparison; and
output the electronic signal, wherein the electronic signal further comprises each historical flight path, each respective suggested flight path and each of the respective one or more factors.

12. The computer-readable medium of claim 9, wherein the one or more factors comprise: an amount of fuel used, a duration, the time of flight takeoff (T/O) to touchdown (T/D), and exposure to weather hazards.

13. The computer-readable medium of claim 9, wherein generating the suggested flight path further comprises generating the suggested flight path based on an optimization algorithm between at least two factors of the one or more factors.

14. The computer-readable medium of claim 9,
wherein the weather data from the weather radar system onboard the aircraft comprises one or more of: storm pattern reflectivity, predicted storm track, weather cell trending and weather cell tracking, and
wherein receiving the weather data further comprises receiving additional weather information comprising: area weather information, jet stream activity, position of high pressure areas, position of low pressure areas, position of troughs, position of fronts, SIGMETs, AIRMETS, and types of fronts.

15. A system comprising:
a memory;
processing circuitry operatively coupled to the memory, the processing circuitry configured to:
receive weather data observed on a flight path while the aircraft follows the flight path;
receive flight data for aircraft while the aircraft follows the flight path;
store the received weather data and the flight data of the observed flight path at the memory;
generate a suggested flight path, wherein the suggested flight path is based on the stored weather data and the flight data of the flight path;
compare the suggested flight path to the flight path;
calculate one or more factors based on the comparison; and
output an electronic signal comprising the observed flight path, the suggested flight path and the one or more factors, wherein the electronic signal is configured to cause the observed flight path, the suggested flight path and the one or more factors to be displayed on a user interface.
